# EUROPEAN PATENT SPECIFICATION

(11) **EP 0 666 877 B1**
(45) Date of publication and mention of the grant of the patent: **31.03.1999**
(21) Application number: 94923240.9
(22) Date of filing: 24.06.1994
(51) Int. Cl.: C08F 14/26

(54) **POLYMERIZATION OF LIQUID TETRAFLUOROETHYLENE IN AQUEOUS DISPERSION**
POLYMERISATION VON FLÜSSIGEM TETRAFLUORETHYLEN IN WÄSSRIGER DISPERSION
POLYMERISATION DE TETRAFLUOROETHYLENE LIQUIDE EN DISPERSION AQUEUSE

(30) Priority: 27.08.1993 US 113532; 18.05.1994 US 245326; 18.05.1994 US 245395
(43) Date of publication of application: 16.08.1995
(73) Proprietor: W.L. GORE & ASSOCIATES, INC., Newark, Delaware 19714-9206 (US)
(72) Inventor: WU, Huey, Shen, Newark, DE 19711 (US); HEGENBARTH, Jack, Wilmington, DE 19803 (US); HAZLEBECK, David, E., Hockessin, DE 19707 (US)
(74) Representative: Klunker . Schmitt-Nilson . Hirsch
(86) International application number: US9407141
(87) International publication number: WO9506073

(56) References cited:
- EP-A- 0 248 446
- US-A- 3 953 566
- US-A- 4 384 092

## Description

### FIELD OF THE INVENTION

This invention relates to polytetrafluoroethylene materials and to free radical polymerization of liquid tetrafluoroethylene in aqueous dispersion.

### BACKGROUND OF THE INVENTION

Emulsion polymerization of gaseous tetrafluoroethylene (TFE) or its copolymers is known. Aqueous colloidal dispersions of PTFE or TFE comonomer systems can be prepared in a pressure reactor by placing gaseous TFE monomer, or a mixture of it and comonomers in contact with an aqueous solution containing at least one emulsifier which generally is a fluorinated surfactant, possibly a buffer for keeping the medium at a given pH, and at least one initiator capable of forming free radicals at the polymerization temperature. The free radical initiators are usually water soluble peroxides, or alkaline or ammonium persulfates. Persulfate can be used alone if the polymerization temperature is above approximately 50°C, or in association with a reducing agent such as ferrous salt, silver nitrate, or sodium bisulfite if the polymerization temperature is approximately between 5 to 55°C, as described in the U.S. Patent No. 4,384,092. The fluorinated surfactants can be anionic, cationic, or nonionic surfactants that possess fluorine atoms and possibly chlorine or hydrogen atoms. However, the most commonly used surfactants are the salts of perfluorinated carboxylic acids or the salts of perfluorinated sulfonic acids. The gaseous monomer molecules enter the aqueous liquid and react to form polymer without first forming a distinct liquid phase.

Emulsion polymerization of tetrafluoroethylene in general produces colloidal particles in the shape of spherical, ellipsoidal, rod-like, or sometimes needle like. The colloidal particles produced by conventional methods are all in a distinct domain (discontinuous) where the aqueous phase is continuous.

### SUMMARY OF THE INVENTION

In this invention polymerization of liquid monomer takes place, rather than gaseous monomers as in the prior art.

The ingredients, ratios and conditions are selected to result in polymerization of liquid tetrafluoroethylene (TFE) and optionally, minor amounts of other fluorinated ethylenically-unsaturated monomers that can be present. Free radical polymerization of the monomers produces polymers of tetrafluoroethylene. The polymers have a three-dimensional continuous micro-network of fibrils and bundles of fibrils and may have randomly dispersed platelets.

The invention is directed to a method for preparing TFE-polymers according to claim 7.

In one aspect of the invention, the polymer produced is characterized as a spongy mass comprised visually of layers of sheet-like configurations, and which has a microstructure of a three-dimensional continuous network of convoluted randomly disposed fibrils and bundles of fibrils.

In another aspect, the polymer produced is characterized as a spongy mass having a microstructure of predominantly randomly disposed platelets interconnecting or interpenetrating one another and also being randomly connected by randomly disposed fibrils, to form a three-dimensional continuous network.

By microstructure is meant that the structure is not visible to the naked eye.

The polymer can be in solid form or can be a gel, especially a hydrogel.

While the polymerization mechanism is not well understood, it is believed to be polymerization of a bicontinuous microemulsion system. A bicontinuous microemulsion system contains both oil (monomer) phase and aqueous phase intertwined into each other, separated by surfactant layers. A rapid polymerization of the monomers (oil phase) can capture the unpolymerized microstructure.

### BRIEF DESCRIPTION OF THE DRAWINGS

Figure 1 is a DSC scan of the material in Example 1.

Figures 2 and 3 are photomicrographs of the material of Example 1.

Figure 4 is a DSC scan of the material of Example 2.

Figures 5 and 6 are photomicrographs of the material in Example 2.

Figure 7 is a DSC scan of the material of Example 3.

Figures 8 and 9 are photomicrographs of the material of Example 3.

Figure 10 is a photomicrograph of the coated membrane of Example 4.

### DETAILED DESCRIPTION OF THE INVENTION

To form the polymers of this invention, a mixture of liquid tetrafluoroethylene monomer and at least one fluorinated surfactant in water is employed. In this invention the TFE is introduced to the reaction vessel in liquid form and the amount of surfactant used in the reaction is adjusted to maximize the formation of bicontinuous microemulsion system. It is believed that a bicontinuous microemulsion is formed spontaneously. A suitable fluorinated surfactant or a mixture of fluorinated surfactants are needed with the weight ratio of the surfactants to all monomers (in the liquid phase) at least 1:10 and preferably from 1:4 or 1:2 or higher in surfactant concentration. There is no criticality in an upper limit, but generally one usually does not go higher than 5:1. The amounts of the surfactants employed are 0.5 to 50 weight percent, preferably 1 to 20 percent; the amounts of total monomers (in the liquid phase) are 0.5 to 50 weight percent; preferably 1 to 30 percent; with the remainder water and optionally some salts. Suitable fluorinated surfactants include a fluorinated anionic surfactant, for example a salt of a fluorinated carboxylic acid or a sulfonic acid, a sulfate, a cationic surfactant for example a fluorinated quartenary ammonium salt; or a fluorinated nonionic surfactant. The mixture is formed at a temperature below the critical temperature (Tc) of TFE for example approximately 33.3°C for TFE, and above the freezing temperature of the surfactant containing aqueous solution. Pressure should be below the critical pressure of TFE (below 39 atm). Mechanical stirring can be provided. Free radical polymerization can be initiated by adding water-soluble free radical initiators, for example, a peroxide, an alkaline or ammonium persulfate, or some water soluble azo compounds or a salt of permanaganate. The free radical initiators can also be used in association with a reducing agent such as ferrous salt, silver nitrate, sodium bisulfite, and the like. It is also possible to initiate the polymerization by photochemical reactions. The possible photoradiation source include ultraviolet (UV) light, electron beam, or gamma radiation. The polymerization temperature is below the critical temperature of tetrafluoroethylene which is about 33.3°C. A lower temperature can be any temperature above the freezing point of the mixture, but practically about 5°C. is preferred.

Comonomers that may be present in the mixture include halogenated (chlorine or fluorine) olefins of 2-18 carbon atoms, for example vinyl chloride, vinylidene chloride, chlorotrifluoroethylene, hexafluoropropylene, perfluoroalkyl vinyl ether, or the like; hydrogenated unsaturated monomers, such as ethylene, propylene, isobutylene, vinyl acetate, acrylates, or the like; crosslinking agents, such as glycidylvinylether, chloroalkyl vinyl ether, allyl-glycidylether, acrylates, methacrylates, or the like. The amount of comonomer that can be present should not be so great as to change the nature of the product that would be obtained if PTFE had been the product.

Free radical polymerization of the unsaturated monomers in such aqueous system can sometimes yield an aqueous medium containing colloidal fluorinated olefins having three-dimensional continuous network microstructure or can yield a spongy gel material.

The resulting sponge-like polymers can be mixed with other chemicals, polymers, pigments, carbons, or metals to form a composite material such as a polymer alloy, a stain resistant mold release coating on articles, or electronic conductors or shieldings, etc. They can be used to impart ultrafine surface coatings on substrates, such as fabrics, metals, ceramics, etc. The sponge-like polymers can also be used to coat microporous articles such as expanded PTFE article to make pore opening smaller.

In addition, the polymers can be used as a white pigment or a modifier which improves flame resistance, non-tackiness, sliding properties, water repellency, soil resistance, corrosion resistance, and weather resistance properties on various substrates, porous or nonporous. The polymers can be also used to form a membrane for filtration, microfiltration or ultrafiltration applications.

### Example 1

In a 2-liter pressure vessel, 900 gram distilled water, 140 grams ammonium perfluoroctanoate and 0.2 gram of ammonium persulfate were charged and the vessel was kept at 22°C. The vessel was purged with nitrogen, followed by pulling a vacuum. The vessel was then purged with tetrafluoroethylene gas, followed by pulling another vacuum. Purging the vessel with tetrafluoroethylene gas followed by vacuum was repeated three times. The oxygen content of the aqueous phase was about 28 ppm. Then, liquid tetrafluoroethylene monomer was charged to the vessel. Approximately 230 grams of tetrafluoroethylene liquid was introduced into the aqueous mixture. The vapor phase over the vessel contents filled spontaneously with tetrafluoroethylene gas to a pressure of about 30 kg/cm². The liquid phase was stirred with a constant speed of about 400 rpm.

0.1 gram of sodium sulfite and 0.1 gram of ferrous sulfate in 100 grams of distilled water was charged to the vessel. Polymerization started instantaneously. The vessel was kept at a temperature between 25 to 30°C by cooling the vessel with cold brine, and the pressure was between 34 to 40 kg/cm². Reaction proceeded for about 95 minutes and stopped. When the pressure inside the vessel was released, a lot of foam came out. The pressure vessel was found to be filled with sponge-like white gel material. The gel was taken out by a spoon. When the gel was placed in boiling water for about 10 minutes it did not melt, nor was the shape deformed. Visually, the white material has a spongy layered structure. The gel material was washed several times with distilled water and dried in an oven at a temperature of about 140°C for 24 hours. The dried material still looked white and felt like a sponge. The total weight was about 230 grams.

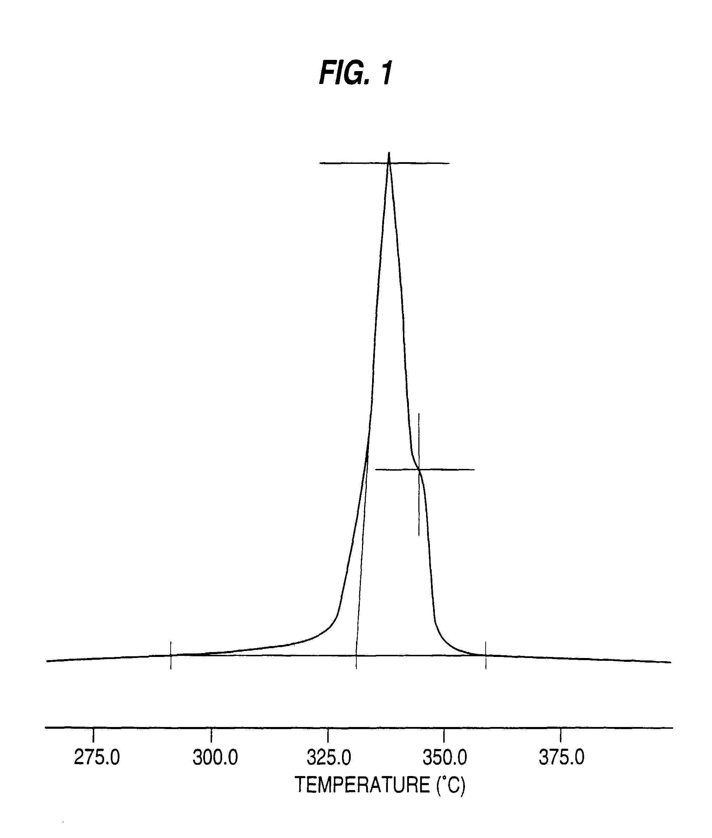

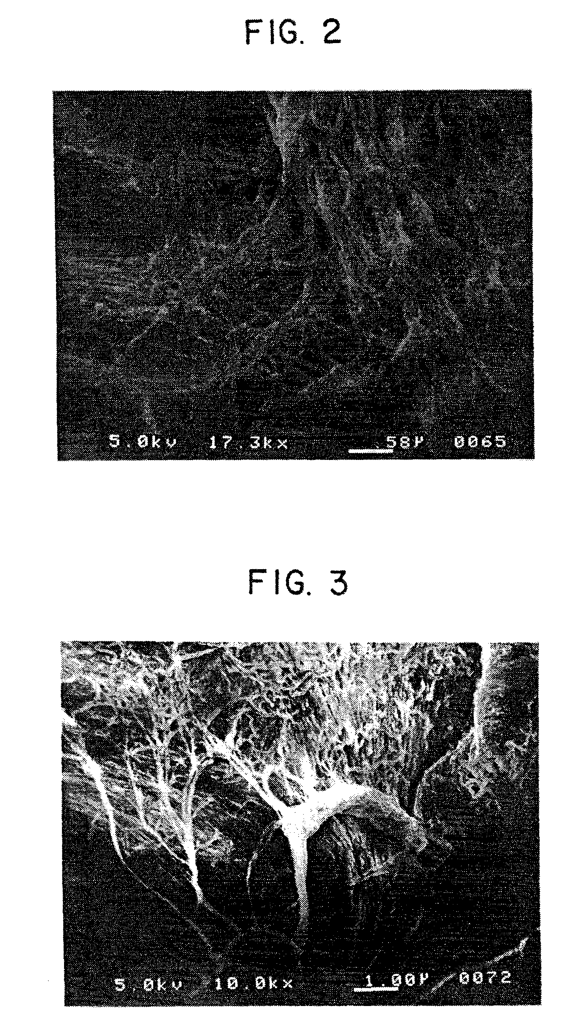

The material was subjected to tests for characterization. Thermal analysis of the dried material confirmed the material to be polytetrafluoroethylene. Differential scanning calorimetry (DSC) analysis showed this material has a melting temperature at about 339°C, as shown in Figure 1. DSC was run at a heating rate of 10°C/min. Scanning electron microspy (SEM) showed that the material has not only layers of sheet like microstructure but also 3-dimensional continuous network structure of fibrils and fibril bundles (as seen in Figures 2 and 3) sometimes platelets interpenetrating or interconnecting each other are observed. The fibril structure looks like tree roots entangled with each other.

Surface analysis on the sponge-like material taken from the center of the reactor vessel shows its surface area to be about 19.5 m²/gram and its average pore diameter to be about 20 Angstroms. These measurements were made by Porous Materials, Inc., Analytical Services Division at Cornell Industrial, Research Park, Ithica, New York using an auto adsorption system with nitrogen as adsorbate. The instrument temperature was 303.36 K and room temperature was 298.56 K. Sample weight is 1.11 gram and was outgassed to 2 X 10⁻⁵ atmosphere vacuum at about 24°C. Surface area was calculated by volumetric multipoint BET method and the average pore diameter is calculated by the Pierce method.

### Example 2

In a 2-liter pressure vessel, 1000 grams distilled water, 70 grams ammonium perfluorooctanoate and 0.2 gram of ammonium persulfate were charged and the vessel kept at 15°C. The vessel was purged with nitrogen followed by a vacuum. The vessel was then purged with tetrafluoroethylene gas followed by a vacuum. Purging the vessel with tetrafluoroethylene gas followed by a vacuum was repeated three times. The oxygen content of the aqueous phase was about 21 ppm. Then, liquid tetrafluoroethylene monomer was charged to the vessel. Approximately 120 grams of tetrafluoroethylene liquid was charged to the aqueous mixture. The vapor phase above the liquid filled with tetrafluoroethylene gas with a pressure about 27.5 Kg/cm². The liquid phase was stirred at a constant speed of about 400 rpm.

0.2 gram of sodium sulfite and 0.1 gram of ferrous sulfate in 100 grams of distilled water was charged to the vessel, and polymerization started instantaneously. The vessel was kept at a temperature between 15 to 25°C and the pressure was between 28 to 31 Kg/cm². The reaction proceeded for about 106 minutes and stopped. A transparent to translucent aqueous dispersion, slightly viscous, was obtained. The aqueous dispersion was subjected to a centrifuge at a rotation speed about 1000 rpm for about 10 minutes. The aqueous dispersion remained stable, with no coagulation. The aqueous dispersion was coagulated with acetone and yielded a sponge-like white material. The sponge-like material was washed several times by acetone and dried in an oven at a temperature of about 140°C for 24 hours. The dried material was still white.

The material was subjected to tests for characterization.

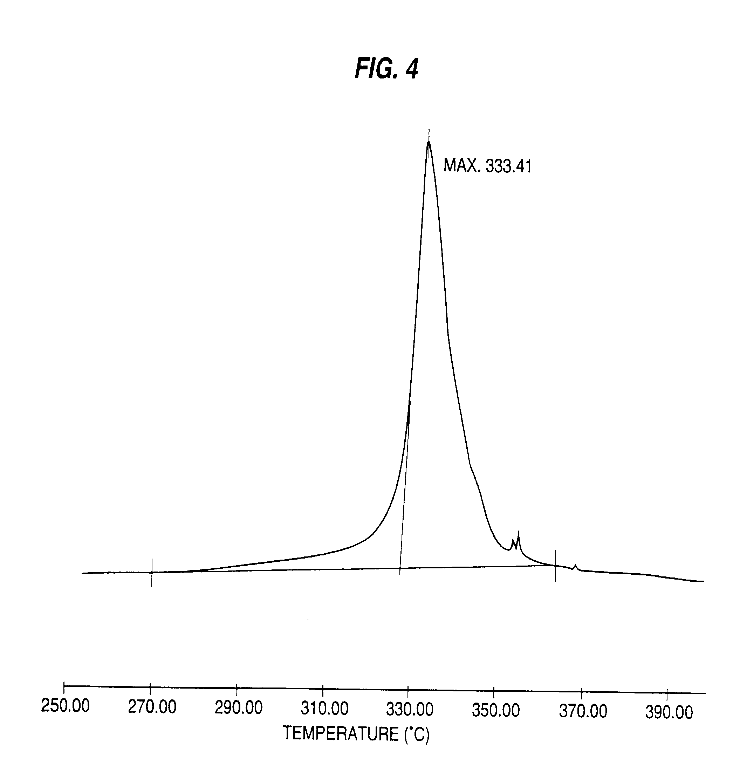

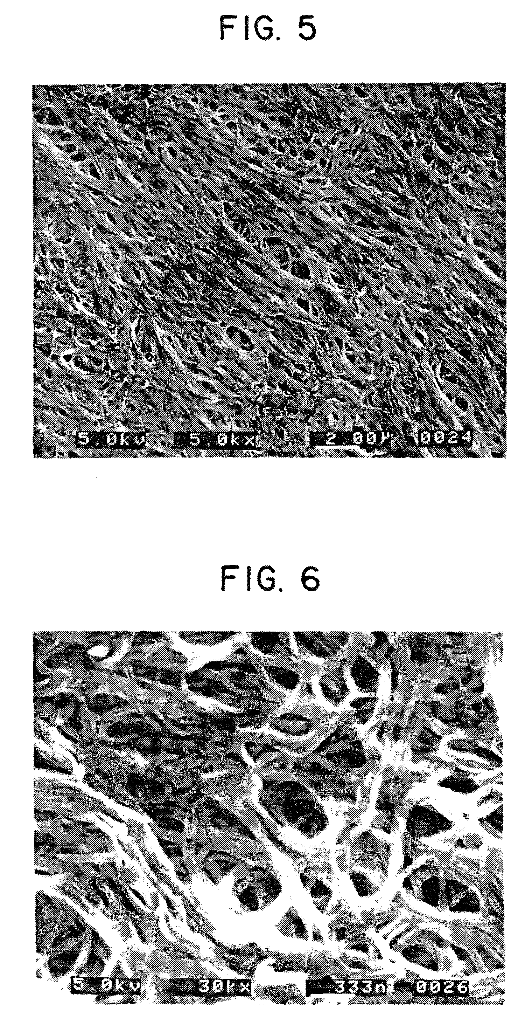

DSC results on the air dried material indicated that it has melting characteristics of polytetrafluoroethylene, as shown in Figure 4. SEM results on the air dried colloidal material showed remarkably randomly disposed microfibrils and microfibril bundles interconnecting and interpenetrating each other forming a three-dimensional continuous network structure of a convoluted, non-aligned nature, as shown in Figures 5 and 6.

### Example 3

In a 2-liter pressure vessel, 1000 grams distilled water, 35 grams ammonium perfluorooctanoate, and 0.2 gram of ammonium persulfate were charged and the vessel kept at 15°C. The vessel was purged with nitrogen followed by a vacuum. The vessel was then purged with tetrafluoroethylene gas followed by a vacuum. Purging the vessel with tetrafluoroethylene gas followed by a vacuum was repeated three times. The oxygen content of the aqueous phase was about 14 ppm. Then, tetrafluoroethylene liquid monomer was charged to the vessel. Approximately 30 grams of tetrafluoroethylene liquid was charged to the aqueous mixture. The vapor phase filled with tetrafluoroethylene gas with pressure about 26 Kg/cm². The liquid phase was stirred with a constant speed of about 400 rpm.

0.2 gram of sodium sulfite and 0.1 gram of ferrous sulfate in 100 grams of distilled water was charged to the vessel. Polymerization started instantaneously. The vessel was kept at a temperature between 15 to 20°C and the pressure was between 27 to 28 Kg/cm². The reaction proceeded for about 105 minutes and stopped. A transparent aqueous dispersion was obtained. The aqueous dispersion was subjected to a centrifuge at a rotation speed about 1000 rpm for about 10 minutes. The aqueous dispersion remained stable with no coagulation. The aqueous dispersion was coagulated with acetone and the resulting product was a sponge like white material. The sponge-like material was washed several times with acetone and dried in an oven at a temperature of about 140°C for 24 hours. The dried material was white and felt like a sponge.

The material was subjected to tests for characterization.

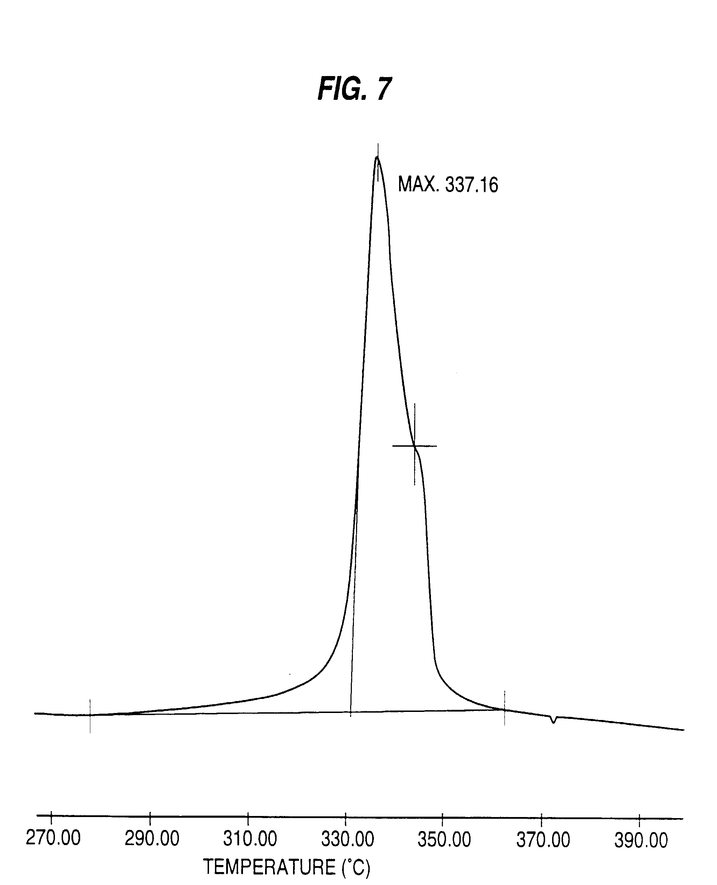

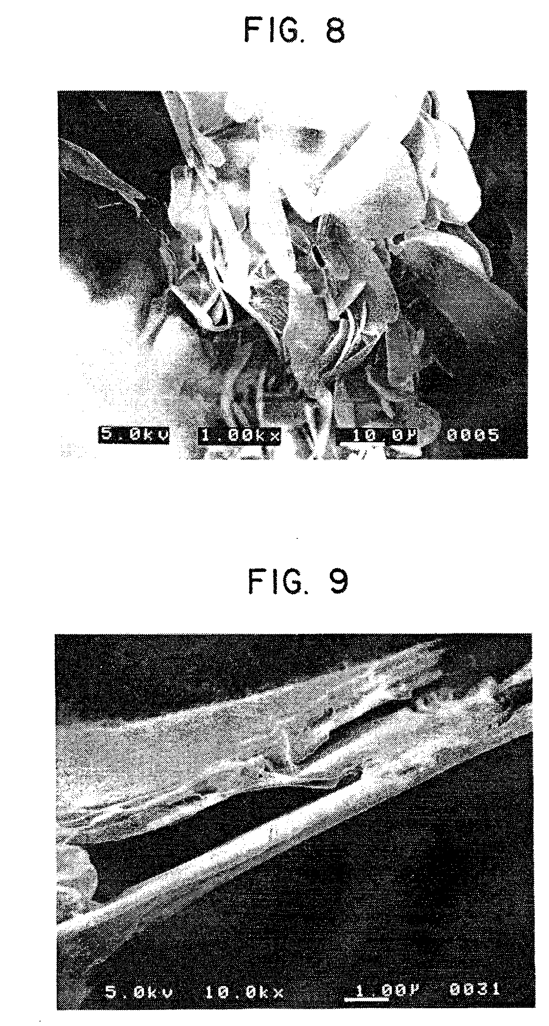

DSC results on the dried material showed melting characteristics of polytetrafluoroethylene, as shown in Figure 7. SEM results on the material showed remarkably randomly disposed platelets and microfibrils interconnecting or interpenetrating each other forming a three-dimensional continuous network structure, as shown in Figures 8 and 9.

### Example 4

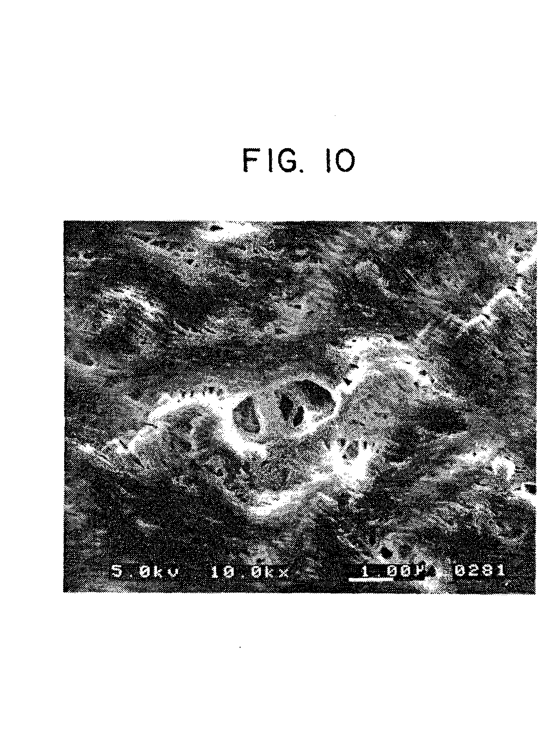

A piece of expanded-porous polytetrafluoroethylene membrane provided by W. L. Gore & Associates, Inc. was used for testing. The membrane had an air permeability of a Gurley number of about 12 seconds and an average nominal pore size of about 0.2 micrometer. 1 part of the aqueous dispersion obtained from Example 2 was diluted with 3 parts of distilled water. The diluted dispersion was used to coat one side of the membrane with a nylon brush. The coated membrane was then placed in an oven at a temperature about 200°C for 3 minutes. The coated membrane had good air permeability, as seen by a Gurley number of about 15 seconds. The porosity of the coated membrane was examined by SEM, as shown in Figure 10. It appears the coating covers the pore openings to some extent.

The air permeability of samples was measured by a Gurley densometer (ASTM) D726-58) manufactured by W & L E Gurley & Sons. The results are reported in terms of Gurley number which is the time in seconds of 100 cubic centimeters of air to pass through 1 square inch of a test sample at a pressure drop of 4.88 inches of water.

## Claims

1. A polytetrafluoroethylene material characterized in that it is a spongy mass comprised visually of layers of sheet-like configuration and has a microstructure of a three-dimensional continuous network of convoluted randomly disposed submicron diameter fibrils and bundles of submicron diameter fibrils.

2. A polytetrafluoroethylene material characterized in that it is a spongy mass comprised of a microstructure of predominantly randomly disposed platelets interconnecting or interpenetrating one another and also being randomly connected by randomly disposed submicron fibrils to form a three-dimensional continuous network.

3. The material of Claim 1 or 2 in the form of a gel.

4. The material of Claim 1 or 2 where the polytetrafluoroethylene is a homopolymer.

5. The material of Claim 1 or 2 where the polytetrafluoroethylene contains comonomer units.

6. The material of Claim 5 wherein the comonomer units are selected from the class consisting of halogenated olefins, hydrogenated unsaturated monomers, and crosslinking monomers.

7. Process for preparing tetrafluoroethylene polymers which comprises:
(a) charging at least one fluorine-containing surfactant to a pressure vessel containing water;
(b) charging liquid tetrafluoroethylene and optionally minor amounts of other fluorinated or non-fluorinated ethylinically-unsaturated monomers to the vessel;
(c) initiating free radical polymerization by adding at least one free-radical initiator at a temperature and pressure below the critical temperature and pressure of tetrafluoroethylene;
(d) polymerizing tetrafluoroethylene in the liquid form below the critical temperature of tetrafluoroethylene; and
(e) recovering the resulting polymerizate;
wherein the weight ratio of fluorine-containing surfactant to all monomers is at least 1/10 or higher.

8. The process of Claim 7 wherein tetrafluoroethylene is the only monomer present.

9. The process of Claim 7 or 8 wherein the weight ratio of the fluorine-containing surfactant to all monomers is at least 1/4 or more.

10. The process of Claim 9 wherein the surfactant is ammonium perfluorooctanoate.

## Patentansprüche

1. Polytetrafluorethylen-Material, **dadurch gekennzeichnet,** daß es eine schwammartige Masse ist, die optisch aus Schichten blattartiger Konfiguration besteht und eine Mikrostruktur aus einem dreidimensionalen kontinuierlichen Netz aus verwundenen ungeordnet angeordneten Fibrillen mit Submikron-Durchmesser und Bündeln von Fibrillen mit Submikron-Durchmesser hat.

2. Polytetrafluorethylen-Material, **dadurch gekennzeichnet,** daß es eine schwammartige Masse ist, die aus einer Mikrostruktur vorwiegend ungeordnet angeordneter Plättchen besteht, die einander verbinden oder durchdringen und auch durch ungeordnet angeordnete Submikron-Fibrillen ungeordnet verbunden sind, um ein dreidimensionales kontinuierliches Netz auszubilden.

3. Material nach Anspruch 1 oder 2 in Form eines Gels.

4. Material nach Anspruch 1 oder 2, in dem das Polytetrafluorethylen ein Homopolymer ist.

5. Material nach Anspruch 1 oder 2, in dem das Polytetrafluorethylen Comonomer-Einheiten enthält.

6. Material nach Anspruch 5, bei dem die Comonomer-Einheiten ausgewählt sind aus der Klasse, die besteht aus halogenierten Olefinen, hydrierten ungesättigten Monomeren und vernetzenden Monomeren.

7. Verfahren zur Herstellung von Tetrafluorethylen-Polymeren, welches aufweist:
(a) Einbringen mindestens eines Fluor enthaltenden grenzflächenaktiven Mittels in ein Wasser enthaltendes Druckgefäß;
(b) Einbringen von flüssigem Tetrafluorethylen und gewünschtenfalls kleineren Mengen anderer fluorierter oder unfluorierter ethylenisch ungesättigter Monomere in das Gefäß;
(c) Starten einer Radikalpolymerisation durch Zugabe mindestens eines Radikalinitiators bei einer Temperatur und einem Druck unterhalb der kritischen Temperatur und des kritischen Drucks von Tetrafluorethylen;
(d) Polymerisieren von Tetrafluorethylen in flüssiger Form unterhalb der kritischen Temperatur von Tetrafluorethylen; und
(e) Gewinnen des sich ergebenden Polymerisats;
wobei das Gewichtsverhältnis von Fluor enthaltendem grenzflächenaktiven Mittel zu allen Monomeren mindestens 1/10 oder höher ist.

8. Verfahren nach Anspruch 7, bei dem Tetrafluorethylen das einzige vorhandene Monomer ist.

9. Verfahren nach Anspruch 7 oder 8, bei dem das Gewichtsverhältnis des Fluor enthaltenden grenzflächenaktiven Mittels zu allen Monomeren mindestens 1/4 oder mehr beträgt.

10. Verfahren nach Anspruch 9, bei dem das grenzflächenaktive Mittel Ammonium-perfluoroctanoat ist.

## Revendications

1. Matière en polytétrafluoroéthylène caractérisée en ce qu'elle est une masse spongieuse constituée visuellement de couches de configuration en feuille et qu'elle possède une microstructure d'un réseau continu bidimensionnel de fibrilles de diamètre inférieur au micron et de faisceaux de fibrilles de diamètre inférieur au micron, enroulés, disposés de façon aléatoire.

2. Matière en polytétrafluoroéthylène caractérisée en ce qu'elle est une masse spongieuse constituée d'une microstructure de plaquettes disposées principalement de façon aléatoire interconnectées ou interpénétrées les unes aux autres, et aussi connectées de façon aléatoire par des fibrilles inférieures au micron disposées de façon aléatoire pour former un réseau continu tridimensionnel.

3. Matière de la revendication 1 ou 2 sous forme d'un gel.

4. Matière de la revendication 1 ou 2 où le polytétrafluoroéthylène est un homopolymère.

5. Matière de la revendication 1 ou 2 où le polytétrafluoroéthylène contient des motifs comonomères.

6. Matière de la revendication 5, dans laquelle les motifs comonomères sont choisis dans l'ensemble constitué par les oléfines halogénées, les monomères insaturés hydrogénés et les monomères de réticulation.

7. Procédé de préparation de polymères de tétrafluoroéthylène qui comprend les étapes consistant à:
(a) charger au moins un tensioactif fluoré dans un récipient à pression contenant de l'eau;
(b) charger du tétrafluoroéthylène liquide et éventuellement des quantités mineures d'autres monomères à insaturation éthylénique, fluorés ou non fluorés, dans le récipient;
(c) amorcer une polymérisation radicalaire en ajoutant au moins un amorceur de radicaux libres à une température et une pression inférieures à la température et la pression critiques du tétrafluoroéthylène;
(d) polymériser le tétrafluoroéthylène sous forme liquide à une température inférieure à la température critique du tétrafluoroéthylène; et
(e) récupérer le produit polymérisé résultant;
dans lequel le rapport pondéral du tensioactif fluoré à tous les monomères est d'au moins 1/10 ou plus.

8. Procédé de la revendication 7, dans lequel le tétrafluoroéthylène est le seul monomère présent.

9. Procédé de la revendication 7 ou 8, dans lequel le rapport pondéral du tensioactif fluoré à tous les monomères est d'au moins 1/4 ou plus.

10. Procédé de la revendication 9, dans lequel le tensioactif est le perfluorooctanoate d'ammonium.
